# EUROPEAN PATENT APPLICATION

(11) **EP 3 046 009 A1**
(43) Date of publication of application: **20.07.2016**
(21) Application number: 14841796.7
(22) Date of filing: 10.04.2014
(51) Int. Cl.: G06F 3/041, G06F 3/16

(54) **INFORMATION PROCESSING DEVICE, INPUT METHOD, AND PROGRAM**

(30) Priority: 09.09.2013 JP 2013185919
(71) Applicant: NEC CORPORATION, Tokyo 108-8001 (JP)
(72) Inventor: MARUI, Kousuke, Kawasaki-shi Kanagawa 211-8666 (JP)
(74) Representative: Vossius & Partner Patentanwälte Rechtsanwälte mbB
(86) International application number: PCT/JP2014/060371
(87) International publication number: WO 2015/033609

(57) **Abstract**

To provide an information processing apparatus that can solve the problem in which highly accurate input action cannot be realized. A contact detection unit (21) detects contact by an input means. A sound detection unit (22) detects a sound generated upon contact being made. An input determination unit (23) that determines input action using the input means, based on the waveform of the sound and based on the contact.

## Description

### TECHNICAL FIELD

The present invention relates to an information processing apparatus equipped with a touch type input device.

### BACKGROUND ART

For information processing apparatuses such as smartphones, touch type input devices have been widespread as input means. Conventionally, in the touch input device, the contact position at which an input means such as a finger, stylus or the like is touched is detected. However, there is a problem in that detection of the contact position only limits input action using the input means.

Therefore, recently, touch input devices that detect the contact area, change of the contact position, change of the contact area and others in addition to the contact position have been developed.

Further, Patent Document 1 discloses an information processing apparatus that, instead of detecting the contact area, detects vibration information relating to a contact sound that is emitted when a manipulator such as an input means touches the control surface. This information processing apparatus, by comparing the sound intensity of the contact sound with a threshold value based on the detected vibration information, classifies the manipulators into two predetermined types and performs an operation in accordance with the classified type.

### RELATED ART DOCUMENTS

### PATENT DOCUMENTS

Patent Document 1: JP2011-028555A

### SUMMARY

### PROBLEMS TO BE SOLVED BY THE INVENTION

Since, in the information processing apparatus according to Patent Document 1, the manipulators are classified into two predetermined types by comparing the sound intensity of the contact sound with a threshold value, this configuration has the problem in which it is impossible to achieve highly accurate input action.

The object of the present invention is to provide an information processing apparatus, input method and program that can solve the above problem, or the problem in which highly accurate input action cannot be realized.

### MEANS FOR SOLVING THE PROBLEMS

An information processing apparatus of an exemplary aspect of the present invention includes: a contact detection unit for detecting contact by an input means; a sound detection unit for detecting a sound generated upon making contact; and an input determination unit that determines input action using the input means, based on the waveform of the sound and based on the contact.

An input method of an exemplary aspect of the present invention includes the steps of: detecting contact by an input means; detecting a sound generated upon making contact; and determining input action using the input means, based on the waveform of the sound and base on the contact.

A program of an exemplary aspect of the present invention causes a computer to execute: a step of detecting contact made by an input means; a step of detecting a sound generated upon making contact; and a step of determining input action using the input means, based on the waveform of the sound and based on the contact.

### EFFECT OF THE INVENTION

According to the present invention, it is possible to realize highly accurate input action.

### BRIEF DESCRIPTION OF THE DRAWINGS

[FIG. 1]

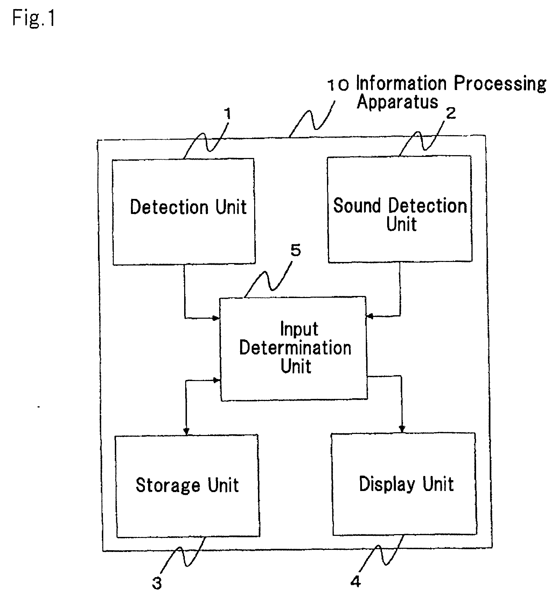

   FIG. 1 is a block diagram showing a configuration of an information processing apparatus of the first exemplary embodiment of the present invention.
[FIG. 2]

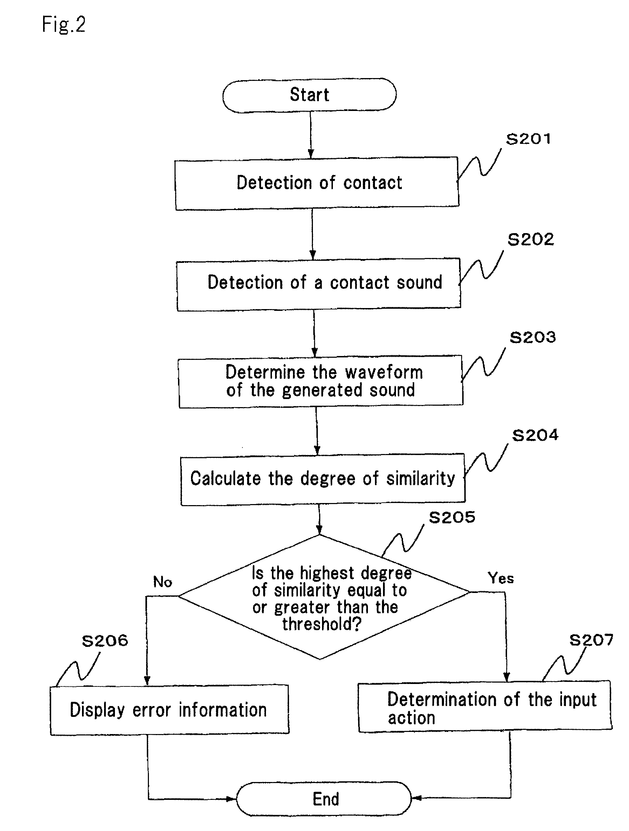

   FIG. 2 is a flow chart for illustrating one example of the operation of an information processing apparatus of the first exemplary embodiment of the present invention.
[FIG. 3]

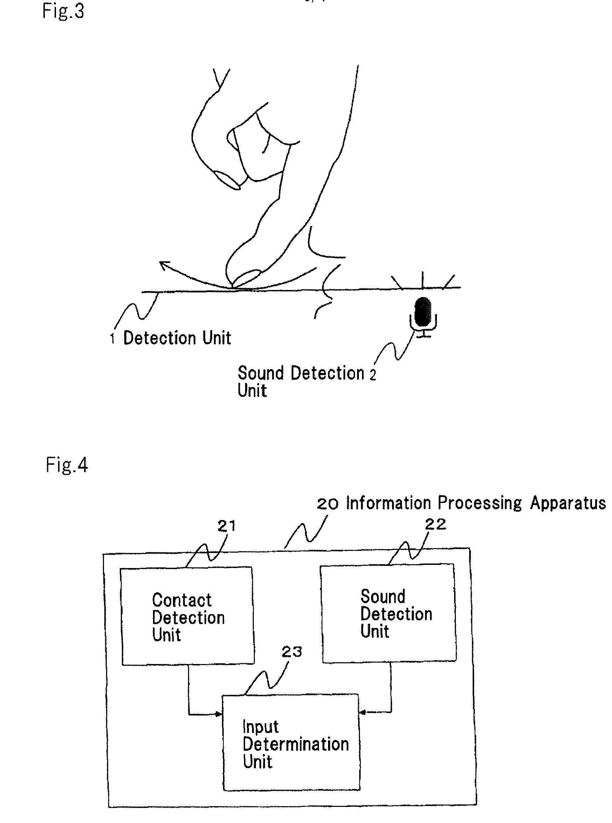

   FIG. 3 is a diagram showing one example of a contact method.
[FIG. 4]
   FIG. 4 is a block diagram showing a configuration of an information processing apparatus of the second exemplary embodiment of the present invention.
[FIG. 5]

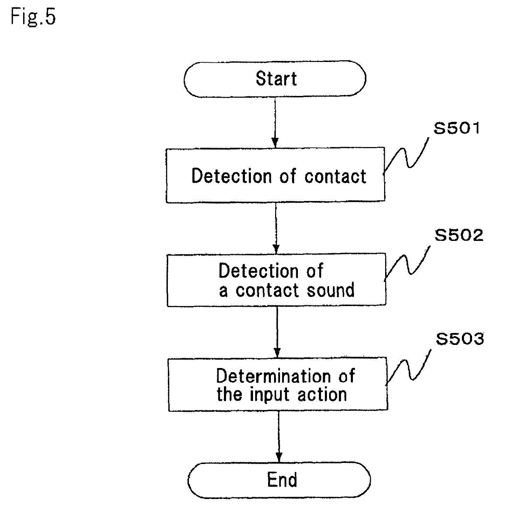

   FIG. 5 is a flow chart for illustrating one example of the operation of an information processing apparatus of the second exemplary embodiment of the present invention.

### EXEMPLARY EMBODIMENT

Now, the exemplary embodiments of the present invention will be described with reference to the drawings. In the following description, components having the same functions may be allotted the same reference numerals without description.

FIG. 1 is a block diagram showing a configuration of an information processing apparatus of the first exemplary embodiment in the present invention. Information processing apparatus 10 shown in FIG. 1 includes contact detection unit 1, sound detection unit 2, storage unit 3, display unit 4 and input determination unit 5. Information processing apparatus 10 is, for example a mobile phone, smartphone, game machine, PC (Personal Computer), PDA (Personal Digital Assistance: mobile information terminal) or the like. PCs may include tablet PCs, notebook PCs and others.

Contact detection unit 1 detects contact made by an input means and outputs a detection signal representing the detection result. The detection signal shows the detection result, for example, the contact position and contact area that the input means touches.

Here, contact detection unit 1 is, for example a touch panel, a touch sensor and the like. The detection mechanism for detecting contact is not particularly limited, but electrostatic capacitive mechanism and others can be mentioned. The input means may be, for example a finger, stylus or the like.

Sound detection unit 2 detects a generated sound that is emitted when the input means makes contact with contact detection unit 1 that then outputs a sound generation signal that represents the generated sound. Here, when information processing apparatus 10 is a mobile phone or the like, the information processing apparatus 10 may be equipped with a microphone for phone conversations. In this case, the microphone may be shared by sound detection unit 2, or sound detection unit 2 may be provided separately from the microphone.

Storage unit 3 stores a variety of information. For example, storage unit 3 stores plural pieces of registered sound information each representing a registered sound. Specifically, the registered sound is a sound corresponding to a contact method by which the input means touches contact detection unit 1, and storage unit 3 stores information on a registered sound for each contact method.

The contact methods may include, for example, a method by which contact detection unit 1 is touched by the tip of a finger and a method by which contact detection unit 1 is touched by the nail of a finger. Further, the contact methods may include a method by which contact detection unit 1 is pressed by the tip of a finger, a method by which contact detection unit 1 is rubbed by the tip of a finger, a method by which contact detection unit 1 is tapped by the nail of a finger, a method by which contact detection unit 1 is scratched by the nail of a finger, a method by which contact detection unit 1 is tapped by a stylus, and a method by which contact detection unit 1 is rubbed by a stylus.

Here, the registered sound information may have been stored in advance in storage unit 3 or may be registered by the user using information processing apparatus 10.

Display unit 4 displays a variety of information. Here, display unit 4 may be a LCD (Liquid Crystal Display: LC display), for example. Contact detection unit 1 may be formed integrally with display unit 4, may be attached over display unit 4, or may be provided separately from display unit 4. The integration of contact detection unit 1 and display unit 4 may be realized by on-cell, in-cell and other structures.

Input determination unit 5 determines input action using the input means, based on the waveform of the generated sound detected by sound detection unit 2 and based on the contact detected by contact detection unit 1.

Specifically, input determination unit 5 determines the input action in the following manner.

First, input determination unit 5 determines the waveform of the generated sound represented by the sound generation signal output from sound detection unit 2. At this time, input determination unit 5 may determine the waveform of the generated sound for a predetermined time period from the start of detection of the contact by contact detection unit 1, or may determine the waveform of the generated sound from the start of detection up to when the intensity of the generated sound represented by the sound generation signal becomes equal to or lower than a predetermined level.

After determining the waveform of the generated sound, input determination unit 5 compares the waveform of the generated sound with each of the waveforms of the registered sounds stored as the registered information in storage unit 3 and determines the input action based on the result of comparison and based on the contact.

Specifically, input determination unit 5 first compares the waveform of the generated sound with the waveform of each of the registered sounds to calculate the degrees of similarity between the waveform of the generated sound and the waveforms of the registered sounds. The method of calculating the degree of similarity is not particularly limited, but for example, a method of calculating a correlation function between the waveform of the generated sound and the waveform of the registered sound as the degree of similarity, and others may be considered.

Thereafter, input determination unit 5 judges that the contact was performed in a contact method that corresponds to the registered sound that has the waveform with the highest degree of similarity to the waveform of the generated sound, and determines the input action based on the contact method and based on the contact. For example, input determination unit 5, based on the contact method and based on the contact, determines the contact position at which the input means made contact and based on its contact method as the input action.

Here, input determination unit 5 may judge that the contact was performed in a contact method that corresponds to the registered sound that has the waveform with the highest degree of similarity when the highest degree of similarity is equal to or greater than a predetermined threshold value. In this case, when the highest degree of similarity is lower than the threshold value, input determination unit 5 may judge that contact was performed in a predetermined contact method or may judge that no input action has been performed. When it is judged that no input action has been performed, input determination unit 5 may display error information indicating error on display unit 4.

Next, the operation will be described.

FIG. 2 is a chart for illustrating one example of the operation of information processing apparatus 10. Here, the following description will be given by describing an operation when the user scratches contact detection unit 1 with his/her nail, as shown in FIG. 3.

As the user scratches contact detection unit 1 with his/her nail, contact detection unit 1 detects the contact of the nail, and outputs a detection signal indicating the detection result to input determination unit 5 (Step S201).

Sound detection unit 2 detects the generated sound given off when contact detection unit 1 is scratched by a finger nail and outputs a sound generation signal representing the generated sound to input determination unit 5 (Step S202).

Input determination unit 5, upon receiving the detection signal and the sound generation signal, determines the waveform of the generated sound represented by the sound generation signal (Step S203).

Thereafter, input determination unit 5 compares the waveform of the generated sound with the waveform of each of the registered sounds represented by each item of registered information stored in storage unit 3 and calculates the degree of similarity of the waveform of the generated sound with the waveform of each of the registered sounds (Step S204).

Then, input determination unit 5 judges whether or not the highest degree of similarity among the calculated degrees of similarity is equal to or greater than the threshold (Step S205).

When the highest degree of similarity is lower than the threshold, input determination unit 5 displays error information on display unit 4 (Step S206) and ends the process.

On the other hand, when the highest degree of similarity is equal to or greater than the threshold, input determination unit 5 judges that the contact was performed in a contact method corresponding to the registered sound that has the waveform presenting the highest degree of similarity to the waveform of the generated sound. Then, input determination unit 5 determines the input action based on the determined contact method and based on the detection result indicated by the detection signal (Step S207) and ends the process.

The configuration and operation described above is only an example, so that the present invention should not be limited to this.

For example, instead of comparing the waveform of the generated sound with the waveforms of registered sounds, input determination unit 5 may extract the change of a particular frequency component from the waveform of the generated sound and judges the contact method based on the change of the frequency component.

In this example, storage unit 3 stores, for each contact method, information representing a change in frequency in accordance with contact method, as registered sound information. When characteristics of a change in frequency components are recognized for each contact method, storage unit 3 may store information representing the characteristics of the change in frequency components in accordance with contact method, as registered sound information.

As described above, according to the exemplary embodiment, since input action is determined based on the contact using the input means and based on the waveform of the generated sound resulting from the contact, it is possible to achieve different input actions that corresponds to various contact methods with various waveforms. Accordingly, it is possible to realize highly accurate input action.

Further, in the present exemplary embodiment, because input action is determined based on the comparison result obtained by comparing the waveform of the generated sound with the waveform of each of registered sounds, it is possible to determine input action with greater accuracy.

In the present exemplary embodiment, since the degree of similarity between the waveform of the generated sound and each registered sound is calculated by comparing the waveform of the generated sound with the waveform of each of the registered sounds, it is possible to determine input action with greater accuracy.

In the present exemplary embodiment, since input action is determined based on the contact method that corresponds to the registered sound that has the waveform with the highest degree of similarity and based on the contact, it is possible to determine input action in a more exact manner.

In the present exemplary embodiment, since input action is determined based on the waveform of the generated sound detected for a predetermined time period from the start of detection of the contact and based on the contact, it is possible to promptly determine the input action.

In the present exemplary embodiment, since input action is determined based on the waveform of the generated sound detected from the start of detection up to when the intensity of the generated sound becomes equal to or lower than a predetermined level and based on the contact, it is possible to determine the input action with greater accuracy.

Next, the second exemplary embodiment will be described.

FIG. 4 is a block diagram showing the configuration of an information processing apparatus of the second exemplary embodiment of the present invention. Information processing apparatus 20 shown in FIG. 4 includes contact detection unit 21, sound detection unit 22 and input determination unit 23.

Contact detection unit 21 detects contact by an input means.

Sound detection unit 22 detects a sound that is emitted when the input means makes contact with contact detection unit 21.

Input determination unit 23 determines the input action using the input means, based on the waveform of the sound detected by sound detection unit 22 and based on the contact detected by contact detection unit 21.

FIG. 5 is a chart for illustrating one example of the operation of information processing apparatus 20.

When detecting contact by the input means, contact detection unit 21 first outputs a detection signal indicating the detection result to input determination unit 23 (Step S501).

Sound detection unit 22 detects the sound that is emitted when the input means makes contact with contact detection unit 21, and outputs a sound generation signal representing the sound to input determination unit 23 (Step S502).

Upon receiving the detection signal and the sound generation signal, input determination unit 23 determines the input action using the input means, based on the waveform of the sound indicated by the sound generation signal and based on the contact indicated by the detection signal (Step S503) and ends the process.

As described above, also in this exemplary embodiment, since, similarly to the first exemplary embodiment, input action is determined based on the contact using the input means and based on the waveform of the generated sound resulting from the contact, it is possible to realize highly accurate input action.

The configurations illustrated in the embodiments described above are only examples, and the present invention should not be limited to these configurations.

For example, the function of information processing apparatus 10 and 20 may also be realized by recording a program for realizing the function on a computer-readable recording medium, and causing a computer to read and execute the program recorded on the recording medium.

This application is based upon and claims the benefit of priority from Japanese Patent Application No. 2013-185919, filed on September 9, 2013, the disclosure of which is incorporated herein in its entirety.

### REFERENCE SIGNS LIST

- 1, 21: contact detection unit
- 2, 22: sound detection unit
- 3: storage unit
- 4: display unit
- 5, 23: input determination unit
- 10, 20: information processing apparatus

## Claims

1. An information processing apparatus comprising:
a contact detection unit for detecting contact by an input means;
a sound detection unit for detecting a sound generated upon contact being made; and,
an input determination unit that determines input action using the input means, based on the waveform of the sound and based on the contact.

2. The information processing apparatus according to claim 1, further comprising:
a storage unit for storing plural pieces of registered sound information each representing a registered sound,
wherein the input determination unit compares the waveform of the generated sound with the waveform of each registered sound, and determines the input action based on the comparison result and based on the contact.

3. The information processing apparatus according to claim 2, wherein the input determination unit compares the waveform of the generated sound with the waveform of each registered sound, and calculates the degree of similarity of the waveform of the generated sound with the waveform of each registered sound.

4. The information processing apparatus according to claim 3, wherein the storage unit stores, for each contact method in which the input means contacts the contact detection unit, the registered sound information representing a sound corresponding to the contact method as the registered sound, and
the input determination unit determines the input action, based on the contact method corresponding to a registered sound that has the waveform having the highest degree of similarity and based on the contact.

5. The information processing apparatus according to claim 4, wherein, when the highest degree of similarity among the degrees of similarity is equal to or greater than a threshold, the input determination unit determines the input action, based on the contact method corresponding to a registered sound having the waveform of the highest degree of similarity and based on the contact.

6. The information processing apparatus according to any one of claims 1 to 5, wherein the input determination unit determines the input action, based on the waveform of the sound detected within a predetermined time period from the start of detection of the contact.

7. The information processing apparatus according to any one of claims 1 to 5, wherein the input determination unit determines the input action, based on the waveform of the sound detected from the start of detection of the contact up to when the intensity of the sound becomes equal to or lower than a predetermined level.

8. An input method comprising the steps of:
detecting contact by an input means;
detecting a sound generated upon contact being made; and,
determining input action using the input means, based on the waveform of the sound and based on the contact.

9. A program for causing a computer to execute:
a step of detecting contact by an input means;
a step of detecting a sound generated upon contact being made; and,
a step of determining input action using the input means, based on the waveform of the sound and based on the contact.
